Europäisches Patentamt

European Patent Office

Office européen des brevets

(11) Numéro de publication: **0 391 767**
**A1**

# (12) DEMANDE DE BREVET EUROPEEN

(21) Numéro de dépôt: 90400820.8

(22) Date de dépôt: 26.03.90

(51) Int. Cl.⁵: **B62D 33/04, B60J 7/10, B60P 7/04**

(30) Priorité: 06.04.89 FR 8904548

(43) Date de publication de la demande:
**10.10.90 Bulletin 90/41**

(84) Etats contractants désignés:
**AT BE CH DE DK ES GB IT LI LU NL SE**

(71) Demandeur: **SOCIETE D' EXPLOITATION DES CARROSSERIES JOSEPH LIBNER**
**Saint Lin**
**F-79420 Reffannes(FR)**

(72) Inventeur: **Libner, Joseph Casimir**

**F-79420 Saint Lin(FR)**

(74) Mandataire: **CABINET BONNET-THIRION**
**95 Boulevard Beaumarchais**
**F-75003 Paris(FR)**

(54) **Remorque de véhicule susceptible de recevoir au moins un conteneur.**

(57) Remorque de véhicule automobile susceptible de transporter des marchandises quelconques ou au moins un conteneur.

Selon l'invention, des éléments de l'armature bâchée surmontant le plateau (14), et notamment deux longerons (24) d'une structure de toit sont susceptibles d'être écartés momentanément pour le chargement d'un conteneur, grâce à deux mécanismes télescopiques (34 et 36).

FIG.5

EP 0 391 767 A1

## Remorque de véhicule susceptible de recevoir au moins un conteneur

L'invention concerne une remorque de véhicule adaptée pour le transport de tous types de marchandises et susceptible en outre de recevoir un ou plusieurs conteneurs.

Une remorque de véhicule automobile se compose classiquement d'un châssis monté sur roues et supportant un plateau. Le plateau est surmonté d'une armature bâchée comportant au moins quatre montants verticaux situés aux quatre coins du plateau et une structure de toit comprenant un cadre composé de deux longerons longitudinaux et de deux traverses avant et arrière, respectivement. Ce type de véhicule permet de transporter par route les marchandises les plus diverses. On connaît aussi des remorques spécialisées dans le transport des conteneurs. Une telle remorque se compose généralement d'un châssis monté sur roues et dépourvu de plateau, ledit châssis comportant seulement des longerons et traverses susceptibles de recevoir un ou plusieurs conteneurs. Ce second type de véhicule est donc très spécialisé et il est fréquent qu'en exploitation, le transporteur soit contraint d'effectuer un voyage à vide s'il n'est pas possible de trouver du fret en conteneur à l'aller comme au retour. De plus, il est hors de question de transporter un conteneur sur le plateau d'une remorque de véhicule automobile classique, car les dimensions normalisées des conteneurs sont très proches de celles des armatures bâchées qui équipent les remorques classiques. La présence d'une telle armature bâchée empêche donc le chargement et le déchargement d'un conteneur sur une remorque de véhicule à plateau.

L'invention propose un nouveau type de remorque de véhicule à plateau, muni d'une armature bâchée aux dimensions habituelles et permettant néanmoins le chargement d'un ou plusieurs conteneurs.

Dans cet esprit, l'invention concerne donc plus particulièrement une remorque de véhicule, du type comportant un plateau rectangulaire et une armature bâchée surmontant ce plateau, ladite armature comportant au moins quatre montants verticaux respectivement situés près des quatre coins du plateau et une structure de toit comprenant notamment deux longerons longitudinaux, caractérisée en ce que des éléments de ladite armature sont montés sur des équipages mobiles agencés pour permettre au moins l'écartement desdits longerons longitudinaux de ladite structure de toit, pour permettre le chargement d'un conteneur.

La remorque telle que définie ci-dessus permet donc le chargement d'un conteneur par le dessus, au moyen d'une grue, dès lors que la bâche de toit est dégagée.

Selon une autre caractéristique de l'invention, l'une des traverses hautes de ladite armature, de préférence la traverse arrière, est montée par charnière sur au moins l'un desdits montants, de façon à permettre son dégagement par pivotement. Dans ces conditions, il devient également possible de charger le ou les conteneurs par une extrémité de la remorque, notamment par l'arrière, au moyen d'un portique roulant enjambant ladite remorque.

Enfin, selon une autre caractéristique de l'invention, les montants avant et arrière ont une structure télescopique pour surélever ladite structure de toit. Dans ces conditions, il devient possible de charger le ou les conteneurs par le côté au moyen d'un élévateur. Ce dernier mode de chargement convient surtout pour un conteneur vide.

L'invention sera mieux comprise et d'autres avantages de celle-ci apparaîtront plus clairement à la lumière de la description qui va suivre d'une remorque de véhicule automobile conforme à son principe, donnée uniquement à titre d'exemple et faite en référence aux dessins annexés dans lesquels:

- la figure 1 est une vue schématique en élévation latérale d'une remorque de véhicule automobile conforme à l'invention;
- la figure 2 est une vue de dessus de la figure 1;
- la figure 3 est une vue arrière de la remorque, suivant la flèche III de la figure 1, pendant des opérations de chargement et/ou déchargement d'un conteneur;
- la figure 4 est une vue avant de la remorque, suivant la flèche IV de la figure 1;
- la figure 5 est une vue de détail montrant un moyen de verrouillage entre un montant vertical et un mécanisme télescopique; et
- la figure 6 est une vue schématique montrant l'actionnement par câble des coulisseaux des montants télescopiques de l'armature bâchée.

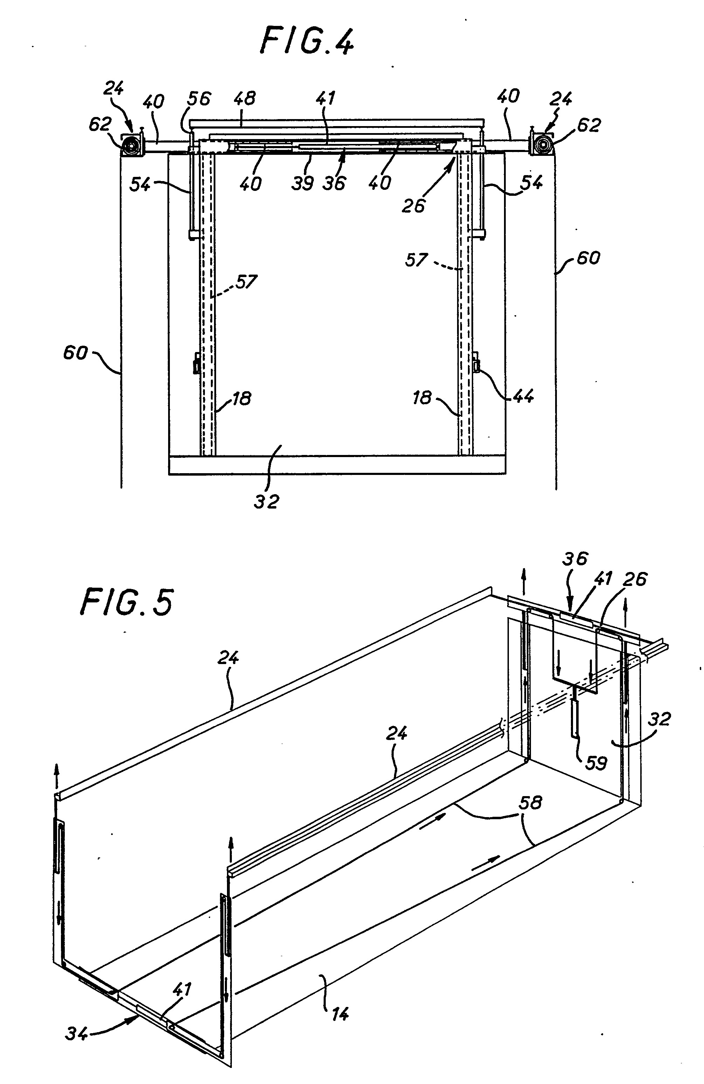

En se reportant aux dessins, on a représenté une remorque de véhicule automobile comportant un châssis roulant 11 muni de plusieurs trains de roues 12 supportant un plateau 14, rectangulaire ainsi qu'une armature 16 munie de bâches, surmontant ce plateau. L'armature 16 comporte principalement quatre montants verticaux dressés respectivement au voisinage des quatre coins du plateau et une structure de toit 20 supportant une bâche de toit 22. On distingue deux montants avant 18 et deux montants arrière 19. Ladite structure de toit 20 comprend deux longerons 24 s'étendant longitudinalement et une traverse avant 26. Une traverse arrière haute 27 est montée de façon amovible entre les deux montants arrière 19. La face arrière du véhicule est occupée par une porte 30 à deux battants respectivement articulés aux deux montants arrière 19. La face avant (figure 4) comporte une paroi métallique 32 solidaire des deux montants avant. Ces derniers sont fixés sur le plateau 14 et supportent la traverse 26.

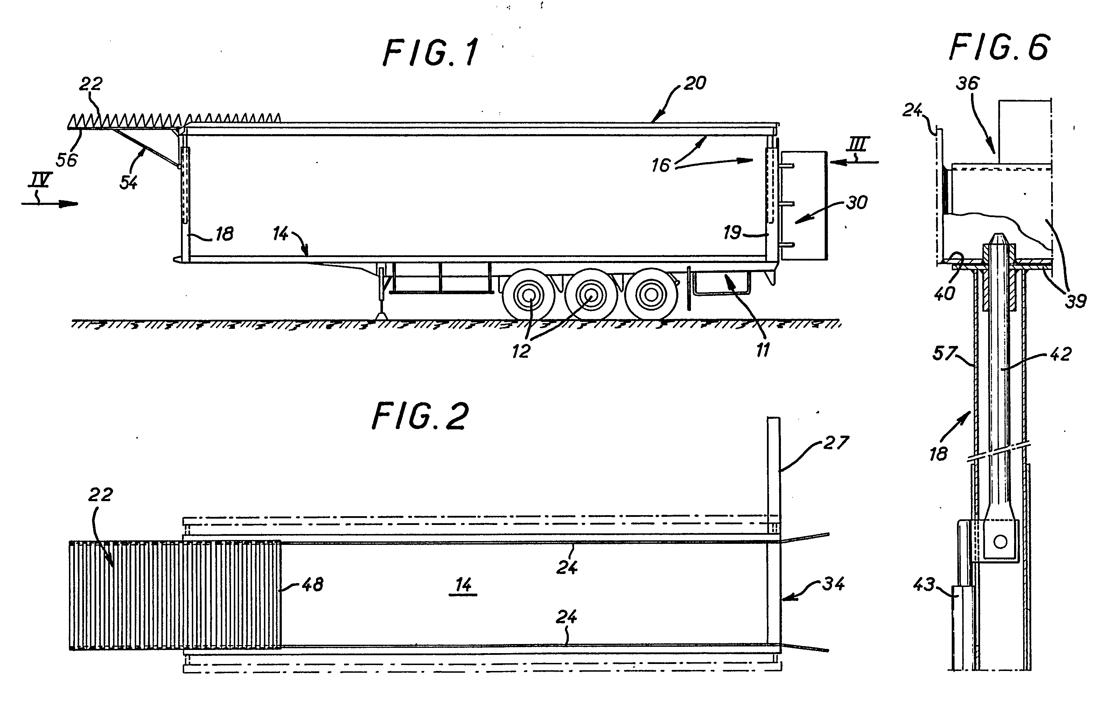

Selon l'invention, des éléments de l'armature 16 sont montés sur des équipages mobiles agencés pour permettre au moins un écartement supplémentaire des longerons 24 de la structure de toit. Cet écartement supplémentaire, visible notamment sur la figure 2, est nécessaire pour le chargement d'un conteneur, comme expliqué précédemment. Dans l'exemple décrit, lesdits équipages mobiles sont constitués principalement par deux mécanismes télescopiques horizontaux, respectivement un premier mécanisme télescopique 34 agencé transversalement à l'arrière au voisinage du plateau 14 et auquel sont fixés les pieds des deux montants arrière 19 et un second mécanisme télescopique 36 agencé transversalement à l'avant et fixé ou combiné à la traverse avant 26 de la structure de toit. Les extrémités avant des deux longerons de la structure de toit sont fixées à ce second mécanisme télescopique.

Chaque mécanisme télescopique 34 ou 36 se compose principalement d'une poutre tubulaire 39, à section carrée ou rectangulaire, ouverte à ses deux extrémités et abritant deux coulisseaux 40 et un vérin 41 situé entre ceux-ci. Les coulisseaux sont donc installés près des extrémités ouvertes de la poutre 39, de façon à pouvoir ressortir, d'une certaine longueur, au-delà des extrémités de cette poutre, respectivement, sous l'action du vérin 41. Celui-ci est monté "flottant" entre les deux coulisseaux, sa tige étant raccordée à l'un des coulisseaux et le corps du vérin étant raccordé à l'autre coulisseau. Les pieds des deux montants arrière 19 sont soudés aux coulisseaux 40 du mécanisme 34 de sorte que ce sont les deux montants arrière 19 portant les longerons 24 qui s'écartent sous l'action du vérin. En revanche, à l'avant, les extrémités des longerons 24 sont directement fixées aux coulisseaux 40 du mécanisme 36 et c'est la poutre tubulaire 39 qui est fixée aux extrémités supérieures des montants avant 18.

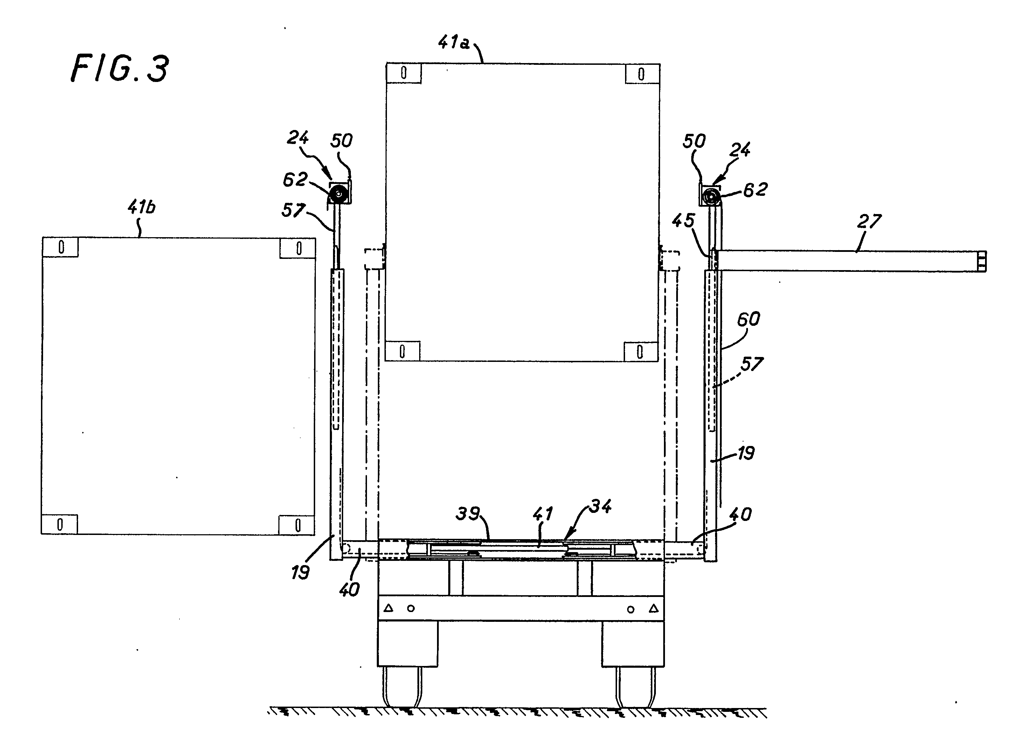

Par ailleurs, comme on le verra plus loin, la bâche de toit 22 peut être entièrement dégagée de la structure de toit et la traverse 27 peut être désolidarisée de l'un au moins des deux montants 19 pour dégager complètement l'arrière de la remorque. Cet agencement à deux mécanismes télescopiques 34, 36, l'un en bas et à l'arrière et l'autre en haut et à l'avant, permet donc de charger un conteneur 41a (figure 3) aussi bien par le haut à l'aide d'une grue que par l'arrière à l'aide d'un portique roulant enjambant la remorque.

Ce système est donc particulièrement avantageux mais on peut envisager des variantes plus simples. On peut par exemple concevoir un système où les montants arrière ne seraient plus mobiles et où les extrémités arrière des longerons 24 seraient fixées à un mécanisme télescopique combiné à la structure de toit. Dans ce cas, le conteneur se chargerait obligatoirement par le haut, à l'aide d'une grue.

La figure 6 est une vue de détail de la fixation du mécanisme télescopique 36 au sommet de l'un des montants avant 18. On voit que la poutre 39 est soudée à l'extrémité du montant 18 et que le coulisseau 40 correspondant est bloqué en position rétractée dans la poutre 39, au moyen d'un verrou 42 actionné par une tige 43 reliée à une poignée 44 (figure 4). Un mécanisme de ce genre est prévu sur chaque montant arrière. Un autre mécanisme de blocage analogue, non représenté, est prévu entre la poutre du mécanisme télescopique 34 et ses deux coulisseaux. Ces moyens de blocage peuvent être mis à profit pour mieux contrôler le déplacement des coulisseaux au moment des manoeuvres destinées à écarter les longerons 24.

Par exemple, en référence à la figure 6, il suffit de ne déverrouiller, dans un premier temps, que l'un des coulisseaux 40, de sorte que l'actionnement du vérin ait pour conséquence de ne déplacer que ce coulisseau jusqu'à ce qu'il rencontre une butée, non visible sur les dessins. On déverrouille alors l'autre coulisseau et le vérin prenant appui contre le premier coulisseau en butée, déplace ce second coulisseau.

La traverse 27 qui se trouve située à la même extrémité de la remorque que le mécanisme télescopique 34 portant les montants arrière 19, est déconnectable des montants 19. Pour ce faire, elle est assemblée par ses deux extrémités aux deux montants 19 grâce à des charnières 45 respectives. Chaque charnière est démontable. On peut par exemple faire en sorte que l'axe d'articulation de la charnière soit amovible. Dès que l'une des charnières est démontée, il est possible d'écarter les montants 19 et de dégager l'arrière de la remorque en faisant pivoter la traverse 27 autour de son autre charnière, comme cela est visible sur les figures 2 et 3.

Par ailleurs, pour écarter les longerons 24, il faut aussi enlever ou au moins dégager la bâche de toit desdits longerons. Pour ce faire, l'invention fait avantageusement appel à un type de bâche de toit connu où la bâche proprement dite est rattachée à des éléments transversaux 48 assujettis à se déplacer suivant la direction longitudinale de la remorque, en étant guidée par des rails 50 portés par les longerons 24. Les éléments 48 sont raccordés aux rails par des galets captifs non représentés. Traditionnellement, ce système permet de resserrer la bâche de toit (repliée en accordéon) près d'une extrémité de la remorque pour permettre son chargement par le haut. Cependant, pour pouvoir écarter les longerons, il est nécessaire de dégager complètement la bâche des traverses. A cet effet, on prévoit deux potences 54, à l'avant de la remorque. Ces potences sont escamotables; elles sont ici montées pivotantes pour pouvoir être rabattues contre la paroi avant 32. Chaque potence comporte un prolongateur de rail 56 susceptible (figure 1) de venir se placer dans le prolongement du rail 50 correspondant. Les potences sont ici articulées aux montants avant 18. Elles sont de dimensions suffisantes pour permettre le transfert de l'ensemble de la bâche de toit repliée entre les deux prolongateurs 56. Une fois cette opération réalisée, on peut écarter les longerons longitudinaux 24. Sur les figures 1 et 2, on a représenté la bâche de toit en cours de transfert vers les prolongateurs.

Selon une autre caractéristique avantageuse, les quatre montants avant et arrière 18, 19 ont une structure télescopique pour permettre de surélever la structure de toit 20, la traverse 27 restant au niveau de la partie supérieure de la porte arrière 30. Chaque montant est donc creux et abrite un coulisseau 57 faisant saillie à son extrémité supérieure. Les deux extrémités arrière des longerons 24 sont fixées aux extrémités des coulisseaux des montants arrière 19 (figure 3) tandis que la traverse avant 26, constituant ici également le second mécanisme télescopique 36, est fixée aux extrémités des coulisseaux des montants avant 18. Les quatre coulisseaux 57 sont reliés à un unique vérin d'actionnement 59 fixé à la paroi avant 32 via un réseau de câbles 58 et de poulies, schématisé à la figure 5. Cet agencement permet l'élévation simultanée des quatre coulisseaux. Les potences 54 sont articulées aux coulisseaux 57 des montants avant; ceux-ci sont ouverts latéralement pour permettre le déplacement vertical des supports desdites potences. Lorsque les montants sont ainsi allongés, on dispose d'une hauteur suffisante entre le plateau et la structure de toit pour charger un conteneur 41b (figure 3), par le côté.

Enfin, il est à noter que chaque longeron 24 comporte un rideau latéral 60 à enrouleur 62, d'un type connu, permettant de fermer les faces latérales de la remorque. Pendant le transport, le toit peut, si nécessaire, rester surélevé. On peut prévoir à cet effet une "jupe" en tôle fixée à la traverse 26 et disposée le long de la partie supérieure de la paroi 32 et un rideau à enrouleur du même type que les rideaux latéraux, agencé entre la structure de toit 20 et la traverse 27. Ces dispositifs permettent d'obturer les ouvertures laissées à la partie supérieure de l'armature bâchée, en cas de surélévation de la structure de toit.

## Revendications

1- Remorque de véhicule du type comportant un plateau rectangulaire (14) et une armature bâchée (16) surmontant ce plateau, ladite armature comportant au moins quatre montants verticaux (18, 19) respectivement situés près des quatre coins du plateau et une structure de toit comprenant notamment deux longerons longitudinaux (24), caractérisée en ce que des éléments de ladite armature sont montés sur des équipages mobiles (34, 36) agencés pour permettre au moins l'écartement desdits longerons longitudinaux (24) de ladite structure de toit, pour permettre le chargement d'un conteneur.

2- Remorque de véhicule selon la revendication 1, caractérisée en ce que les pieds de deux montants (19) situés à une même extrémité de ladite remorque, de préférence l'extrémité arrière, sont fixés à des coulisseaux (40) d'un premier mécanisme télescopique (34) horizontal.

3- Remorque de véhicule selon la revendication 1 ou 2, caractérisée en ce que les extrémités des deux longerons longitudinaux de ladite structure de toit situées à une même extrémité de la remorque, de préférence l'extrémité avant, sont fixées à des coulisseaux (40) d'un second mécanisme télescopique (36) horizontal, agencé pour écarter lesdits longerons.

4- Remorque de véhicule selon la revendication 2 ou 3, caractérisée en ce qu'un mécanisme télescopique horizontal précité comporte une poutre tubulaire (39) abritant les deux coulisseaux (40) précités ainsi qu'un vérin (41) situé entre ceux-ci, en ce que ledit vérin est couplé aux deux coulisseaux et en ce que ces derniers sont montés pour s'étendre au-delà des extrémités de ladite poutre tubulaire, respectivement, lors de l'élongation dudit vérin.

5- Remorque de véhicule selon la revendication 2, caractérisée en ce qu'une traverse (27) située à la même extrémité de la remorque que le mécanisme télescopique (34) portant les deux montants, est assemblée par charnière à au moins l'un de ces montants, de façon à permettre son dégagement par pivotement, en situation de chargement-déchargement.

6- Remorque de véhicule selon l'une des revendications précédentes, dans laquelle ladite structure de toit comporte, de façon connue en soi, une bâche de toit (22) rattachée à des éléments transversaux (48) assujettis à se déplacer suivant la direction longitudinale de la remorque, en étant guidés par des rails (50) portés par lesdits longerons longitudinaux, de façon à permettre un resserrement de ladite bâche de toit, en vue d'un chargement par le haut, caractérisée en ce que deux potences escamotables (54) sont agencées à l'une des extrémités de ladite remorque, chacune comportant un prolongateur de rail (56) susceptible de venir se placer dans le prolongement de l'un desdits rails solidaire d'un longeron longitudinal précité, pour permettre le transfert de l'ensemble de ladite bâche de toit entre ces deux prolongateurs, préalablement à l'écartement desdits longerons longitudinaux.

7- Remorque de véhicule selon l'une des revendications 3 à 6, caractérisée en ce que les deux longerons longitudinaux (24) sont fixés aux sommets des deux montants arrière (19) et en ce que ledit second mécanisme télescopique est fixé ou combiné à une traverse avant de ladite structure de toit, portée par les deux montants avant (18).

8- Remorque de véhicule selon l'une des revendications précédentes, caractérisée en ce que lesdits montants avant (18) et arrière (19) ont une structure télescopique pour surélever ladite structure de toit.

9- Remorque de véhicule selon la revendication 8, caractérisée en ce que chaque montant comporte un coulisseau (57) faisant saillie à son extrémité supérieure, ladite structure de toit étant fixée à ces coulisseaux et en ce que tous ces coulisseaux sont reliés à un vérin d'actionnement (59) ou analogue, via un réseau de câbles (58).

10- Remorque de véhicule selon l'une des revendications précédentes, caractérisée en ce que chaque longeron (24) de ladite structure de toit porte un rideau latéral (60) à enrouleur (62), connu en soi.

## FIG.1

22
20
56
54
IV
16
18
14
19
30
III
12
11

## FIG.2

27
22
48
14
24
24
34

## FIG.6

24
36
40
39
57
18
42
43

EP 0 391 767 A1

# FIG.3

EP 0 391 767 A1

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 497 380  (M. HEROU) <br> * figures 1-3 * | 1,8 | B 62 D   33/04 <br> B 60 J    7/10 <br> B 60 P    7/04 |
| A | | 6 | |
| Y | DE-A-2 262 094  (A. GLOGGER) <br> * figure 5 * | 1,8, | |
| A | | 2,4 | |
| A | DE-U-1 896 879  (J. WINTERHOLER & CO.) <br> * revendications 1,2; figures 1-3 * | 3 | |
| A | US-A-2 757 043  (F. STRICK et al.) <br> * figure 4 * | 6 | |
| A | US-A-4 032 186  (P.A. PICKERING et al.) | | |

| DOMAINES TECHNIQUES RECHERCHES (Int. Cl.5) |
|---|
| B 62 D <br> B 60 J <br> B 60 P |

Le présent rapport a été établi pour toutes les revendications

| Lieu de la recherche | Date d'achèvement de la recherche | Examinateur |
|---|---|---|
| BERLIN | 03-07-1990 | LUDWIG H J |